# EUROPEAN PATENT SPECIFICATION

(11) **EP 1 139 360 B1**
(45) Date of publication and mention of the grant of the patent: **22.03.2006**
(21) Application number: 01300668.9
(22) Date of filing: 25.01.2001
(51) Int. Cl.: H01H 3/12

(54) **Key switch device**
Tastschaltgerät
Dispositif commutateur à touche

(30) Priority: 30.03.2000 JP 2000095669
(43) Date of publication of application: 04.10.2001
(73) Proprietor: Mitsumi Electric Co., Ltd., Chofu-shi, Tokyo (JP)
(72) Inventor: Sasaki, Fimitoshi, c/o Mitsumi Electric Co., Ltd., Chofu-shi, Tokyo (JP)
(74) Representative: Stevens, Jason Paul

(56) References cited:
- EP-A- 0 966 009
- US-A- 4 392 037
- US-A- 5 424 516
- PATENT ABSTRACTS OF JAPAN vol. 017, no. 683 (E-1477), 15 December 1993 (1993-12-15) & JP 05 234456 A (FUJITSU LTD), 10 September 1993 (1993-09-10)

## Description

This invention relates to a key switch device and, particularly, to a key switch device of the link type used for a thin keyboard of a notebook-type personal computer.

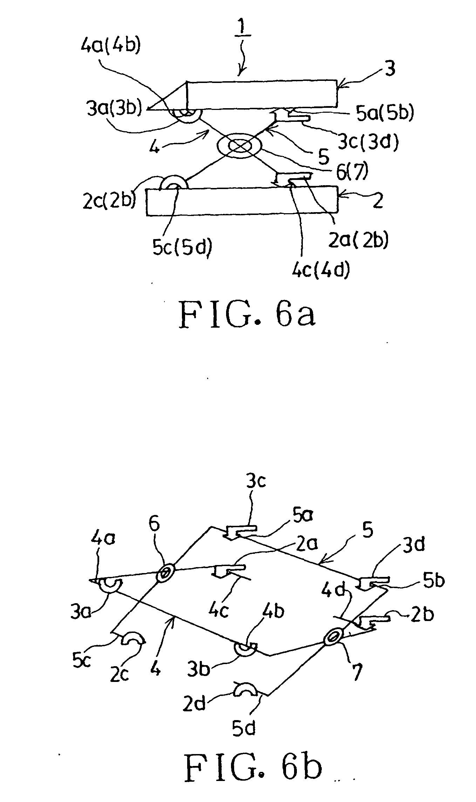

Known key switches are disclosed in US 5424526 and EP 0966009. A further type of conventional key switch device will be described with reference to Figs. 6 to 8. In Fig. 6(a), reference numeral 1 denotes a schematically diagrammed key switch device. The key switch device 1 is of the so-called pantograph link-type in which two link members 4 and 5 are crossing in an X-shape between a base plate 2 and a key top 3, the key top 3 being supported by a rubber spring (not shown) interposed between the base plate 2 and the key top 3, and by the link members 4 and 5. Referring to Fig. 6(b), the link members 4 and 5 are generally U-shaped, and are fitted together at fitting portions 6 and 7 so as to freely turn. The link member 4 is rotatably supported by shafts at rotary portions 4a and 4b at both its upper ends thereof by bearing portions 3a and 3b provided at the lower ends of the key top 3, and slidably engages at slide portions 4c and 4d at both lower ends thereof with slide guides 2a and 2b formed in the base plate 2. The other link member 5 slidably engages at slide portions 5a and 5b at both upper ends thereof with slide guides 3c and 3d formed in the lower ends of the key top 3, and is rotatably supported by shafts at rotary portions 5c and 5d at both lower ends thereof by bearing portions 2c and 2d provided on the substrate 2. The bearings 3a, 3b, 2c and 2d are the ones with a slit.

When depressed, the key top 3 is lowered maintaining nearly a horizontal state due to the linking action of the link members 4 and 5, whereby a switching member (not shown) provided on the base plate 2 is depressed to render the switching member conductive.

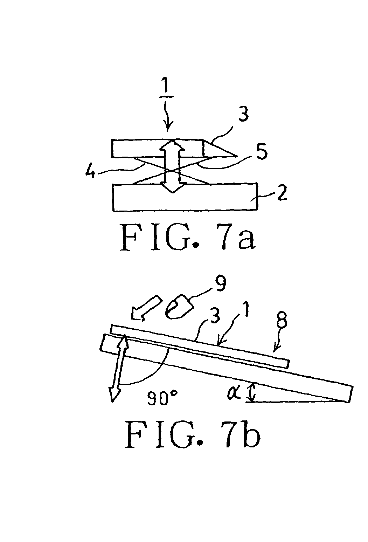

Fig. 7(a) is a diagram illustrating the direction of operation of the key switch device 1. The key top 3 of the key switch device 1 is depressed at a depress angle of about 90 degrees with respect to the surface of the base plate 2.

Fig. 7(b) illustrates a state where the key switch device 1 is mounted on a keyboard 8 that is installed being inclined at an angle α with respect to the horizontal plane. When depressed by a finger 9 of a person who operates the keyboard, the key top 3 of the key switch device 1 is lowered at an angle α of inclination that is added to the depress angle of nearly 90 degrees with respect to the horizontal plane. Here, the angle α of inclination is, in practice, a limited angle. Therefore, the direction of depress by the finger 9 of the person operating the keyboard and the direction of depress of the key top 3, differ greatly toward the upper side of the keyboard 8 to deteriorate the feeling of operation.

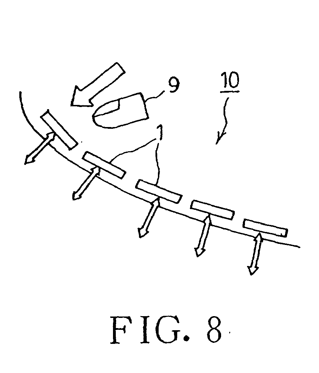

Fig. 8 illustrates a curved keyboard 10 for a desktop use, which is generally regarded to offer the most desirable operability. In the curved keyboard 10, the upper surfaces of the key tops 3 are arranged being so curved that the angle of inclination increases from the lower side toward the upper side to meet the motion of the finger 9.

The above arrangement of the curved keyboard 10 may be desirable. When the above arrangement cannot be realized, however, the depress directions of the key tops 3 of the key switch device 1 may be so improved as to approach those of the above curved keyboard 10, in order to improve the operation feeling of the key switch device 1.

In the above-mentioned conventional key switch device, the two link members cross in an X-shape between the base plate and the key top constituting the so-called pantograph link system, and the key top is supported by the rubber spring and by the two link members.

Therefore, the two link members have fitting portions that fit together in a crossing manner and further have two rotary portions and two slide portions, respectively. That is, the switch device has a total of ten moving support portions. However, the moving support portions have a small strength. In particular, the portions where the link members are fitted together have a small strength, hindering the effort for realizing the key switch device in a reduced thickness.

Further, the slide portions of the key top of the key switch device are injection-molded using a metal mold of a complex shape, the metal mold being manufactured requiring an increased cost.

Besides, the key top is supported at four points at the lower ends thereof by using the link members, two points among the four points being supported by slide portions. Accordingly, the surface of the key top tends to be tilted to develop play; i.e., the surface of the key top is not maintained in a horizontal state.

Moreover, the key top is depressed at an angle of nearly 90 degrees with respect to the surface of the base plate, which is greatly different from the direction of depress by a finger of the operator, deteriorating the operation feeling. Thus, there arises a technical problem that must be solved to realise a key switch device that features an increased strength, a decreased thickness yet being produced at a decreased cost and offering a favourable operation feeling. The object of at least the preferred embodiment of this invention is to solve this problem.

According to a first aspect of the invention, there is provided a key switch device comprising a base plate, a key top mounted on said base plate, a resilient member interposed between said key top and said base plate, a single-piece U-shaped large link member having a perimeter and placed between said base plate and said key top, and rotatable about a first axis, and a single-piece U-shaped small link member placed entirely within the perimeter of said single-piece U-shaped large link member, and rotatable about a second axis forming a single movable plane, the second axis being at right angles to the first axis, whereby said key top is favourably maintained in a horizontal state without developing play.

A preferred embodiment of the invention will now be described by way of example only and with reference to the accompanying drawings, in which:
Fig. 1(a) is a schematic front view illustrating a key switch device according to an embodiment of the invention, and Fig. 1(b) is a perspective view schematically illustrating a small link member and a large link member;
Fig. 2 is a plan view of a key switch device from which a key top has been removed;
Fig. 3(a) is a partly cut-away front view of the key switch device, and Fig. 3(b) is a partly cut-away front view of the key switch device in a state where the key top is depressed;
Fig. 4(a) is a partly cut-away side view of the key switch device, and Fig. 4(b) is a partly cut-away side view of the key switch device in a state where the key top is depressed;
Fig. 5(a) is a view schematically illustrating the direction in which the key top is depressed, and Fig. 5(b) is a view schematically illustrating the direction in which the key top is depressed being mounted on a keyboard;
Fig. 6(a) is a schematic front view illustrating a prior art key switch device, and Fig. 6(b) is a schematic perspective view of the link members;
Fig. 7(a) is a view schematically illustrating the direction in which the prior art key top is depressed, and Fig. 7(b) is a view schematically illustrating the direction in which the prior art key top is depressed being mounted on the keyboard; and
Fig. 8 is a view schematically illustrating a curved keyboard for desktop use which is regarded to offer good operability.

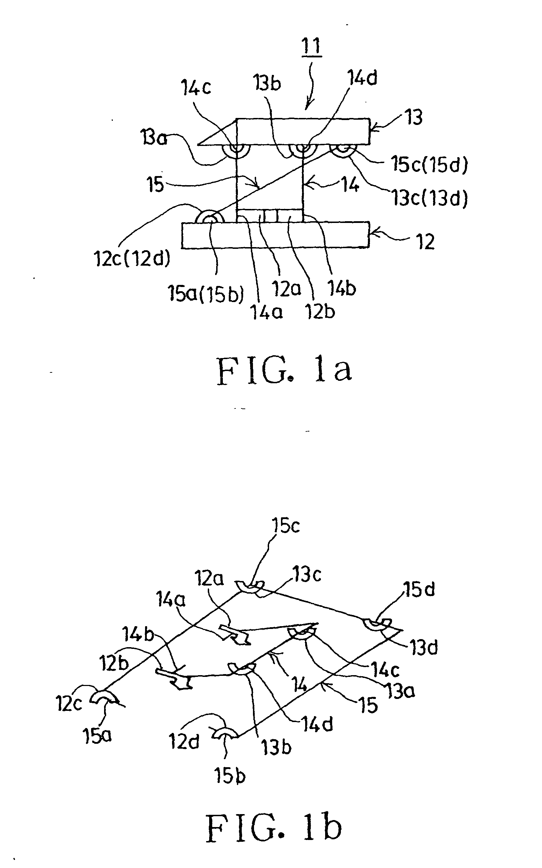

An embodiment of the invention will now be described in detail with reference to Figs. 1 to 5. In Figs. 1(a) and 1(b), reference numeral 11 denotes a key switch device that is schematically diagrammed. The key switch device 11 is provided with a small link member 14 and a large link member 15 that turn at right angles without coming in contact with each other between a base plate 12 and a key top 13 provided over the base plate 12. Slide portions 14a and 14b provided at both lower ends of the small link member 14 slidably engage with slide guides 12a and 12b formed in the base plate 12, and rotary portions 14c and 14d provided at both upper ends thereof are rotatably fitted to bearing portions with slit 13a and 13b provided at the lower ends of the key top 13. Further, rotary portions 15a and 15b at both lower ends of the large link member 15 are rotatably fitted to bearing portions with slit 12c and 12d provided on the base plate 12, and rotary portions 15c and 15d at both upper ends thereof are rotatably fitted to bearing portions with slit 13c and 13d provided at the lower ends of the key top 13.

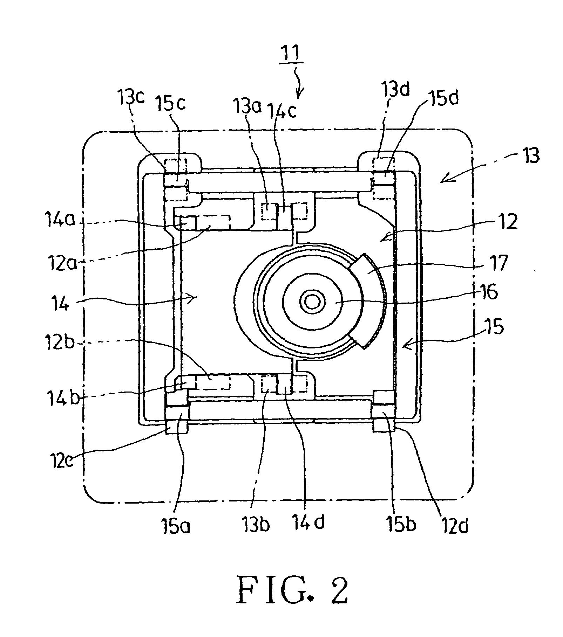

Fig. 2 is a plan view illustrating a state where the key top 13 is removed from the key switch device 11. A resilient member, such as a generally dome-shaped rubber spring 16, is interposed close to the central portion of the key switch device 11, the rubber spring 16 being placed on the base plate 12 and urging the key top 13 placed on the rubber spring 16 upward. The small link member 14 is cut away at its upper central portion in an arcuate shape to meet the shape of the rubber spring 16, so as not to interfere with the rubber spring 16. In Fig. 2, reference numeral 17 denotes a fixing member for fixing the rubber spring 16 on the base plate 12.

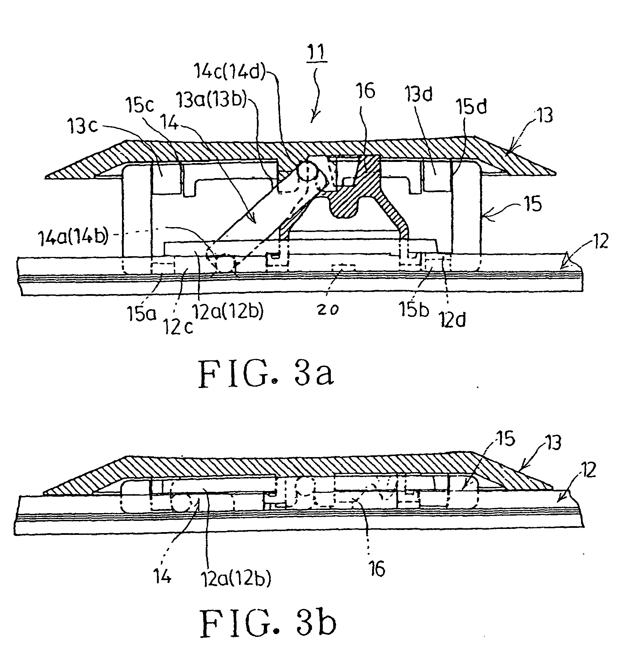

Fig. 3(a) is a partly cut-away front view of the key switch device 11 and illustrates the state before the key top 13 is depressed, and wherein the rubber spring 16 urges the key top 13 upward and, whereby, the small link member 14 and the large link member 15 are raised maintaining predetermined angles relative to the base plate 12.

When the operator depresses the key top 13 in this state, the key top 13 depresses the rubber spring 16 so as to deform it and, at the same time, the small link member 14 and the large link member 15 are pushed down. At this moment, the rotary portions 14a and 14b at both lower ends of the small link member 14 slide in the slide guides 12a and 12b formed in the base plate 12, and the rotary portions 14c and 14d at both upper ends thereof turn in the bearing portions with slit 13a and 13b provided at the lower ends of the key top 13. The rotary portions 15a and 15b at both lower ends of the large link member 5 turn in the bearing portions with slit 12c and 12d provided on the base plate 12, and the rotary portions 15c and 15d provided at both upper ends thereof turn in the bearing portions with slit 13c and 13d provided at the lower ends of the key top 13.

Owing to the linking action of the small link member 14 and the large link member 15, therefore, the key top 13 is depressed nearly in parallel with the base plate 12. When depressed down to a predetermined position, the rubber spring 16 depresses a switching member 20 provided on the base plate 12 so as to be conductive. Further, when the key top 13 is depressed down to the lowermost point, the key top 13 comes into contact with the base plate 12 as shown in Fig. 3(b) and is depressed no more. The direction of depressing the key top 13 in Figs. 3(a) and 3(b) is nearly at right angles with the surface of the base plate 12.

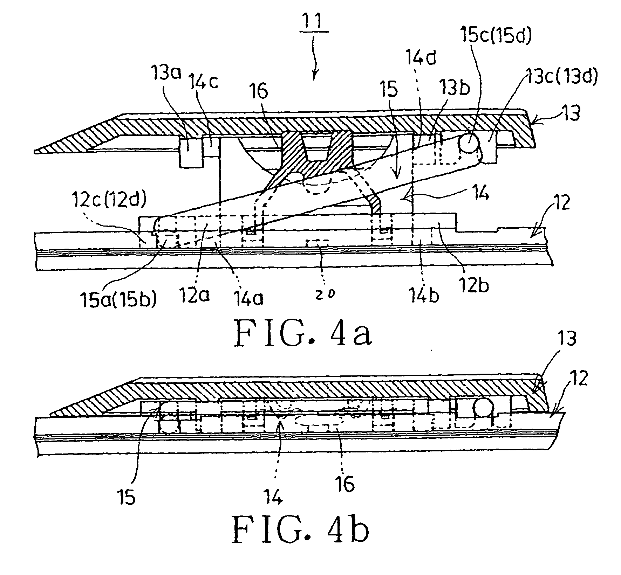

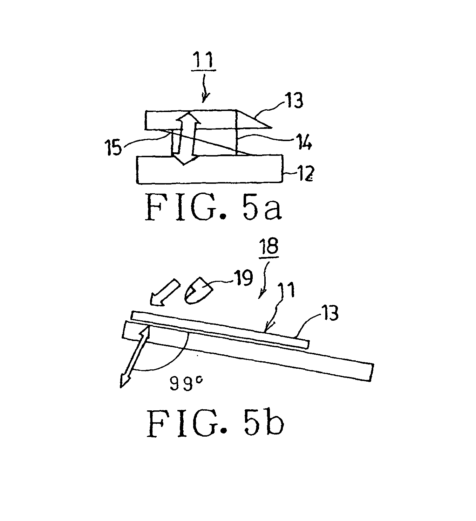

Fig. 4(a) is a partly cut-away side view of the key switch device 11. The key top 13 of the key switch device 11 that is depressed down to the lowermost point as shown in Fig. 4(b), comes to a halt. Here, the key top 13 comes to a halt while moving toward the right accompanying the turn of the large link member 15. This state will be described with reference to Fig. 5(a). The key top 13 is depressed at an angle in excess of 90 degrees with respect to the surface of the substrate 12 as indicated by an arrow. According to experiment, the angle was 99 degrees. Fig. 5(b) illustrates an example in which the key switch device 11 is mounted on a keyboard 18. Being depressed by a finger 19, the key top 13 is depressed in a direction of the depress angle (e.g., 99 degrees) to which is added the angle of inclination of the keyboard 18 with respect to the horizontal plane.

This angle approaches the angle of the above-mentioned curved keyboard (10 in Fig. 8) for the desktop use that offers good operability and, hence, enhances the operability.

As shown in Fig. 4(a), further, the key switch device 11 has eight moving support portions including slide portions 14a, 14b, and rotary portions 14c, 14d, 15a, 15b, 15c and 15d, which is less than ten moving support portions of the conventional key switch device (1 in Fig. 6), and is capable of enhancing the strength. The strength can be further enhanced since there are no fitting portions (6 and 7 in Fig, 6) as employed by the prior art. This makes it possible to decrease the thickness of the key switch device 11.

Besides, there is no slide guide in the lower ends of the key top 13; instead, only the bearing portions with slit 13a, 13b, 13c and 13d are provided. Therefore, the key top 13 is easily molded, and the key switch device 11 can be easily fabricated.

The invention can be modified in a variety of ways without departing from the spirit of the invention, and it should be noted that the invention encompasses the modified examples, as a matter of course.

As described above in detail by way of an embodiment, this invention is concerned with a key switch device in which a key top is mounted on a base plate via a rubber spring so as to be freely lifted and lowered, wherein a small link member and a large link member are provided between the base plate and the key top so as to turn at right angles without contacting to each other, the lower ends of the small link member are slidably fitted into slide guides formed in the base plate, the upper ends thereof are supported by bearing portions with slit provided at the lower ends of the key top, and the lower ends and the upper ends of the large link member are supported by the bearing portions with slit provided on the base plate and at the lower ends of the key top. Therefore, the key top is supported by the rubber spring, by the small link member and by the large link member so as to be freely lifted and lowered.

The key switch device has fewer moving support portions than in the prior art and does not employ the fitting portions for fitting the link members that are mechanically liable to decrease the strength. Accordingly, the key switch device of the invention may have enhanced strength and decreased thickness.

Further, since the key top has no slide guide portion, the surface of the key top is favourably maintained in a horizontal state without developing play. In addition, the key top is molded using a metal mold which is easily fabricated contributing to decreasing the cost.

Moreover, the key top is depressed at an angle in excess of 90 degrees with respect to the surface of the base plate, and offers better operation feeling than that of the prior art.

Thus, at least the preferred embodiment of the invention provides a key switch device having increased strength and a decreased thickness at a decreased cost, yet offering good operation feeling.

## Claims

1. A key switch device (11) comprising:
a base plate (12);
a key top (13) mounted on said base plate (12);
a resilient member (16) interposed between said key top (13) and said base plate (12), **characterised in that** it further comprises:
a single-piece U-shaped large link member (15) having a perimeter and placed between said base plate (12) and said key top (13), and rotatable about a first axis;
and a single-piece U-shaped small link member (14) placed entirely within the perimeter of said single-piece U-shaped large link member (15), and rotatable about a second axis forming a single movable plane, the second axis being at right angles to the first axis,
whereby said key top (13) is favourably maintained in a horizontal state without developing play.

2. A key switch device as claimed in claim 1, wherein said resilient member (16) is a spring.

3. A key switch member as claimed in claim 2, wherein said spring is a rubber spring.

## Patentansprüche

1. Tastschaltgerät (11) mit:
einer Grund- bzw. Basisplatte (12),
einem Tastaufsatz bzw. Tastenknopf (13), der auf der Basisplatte (12) angebracht ist,
einem federnden bzw. elastischen Element (16), das zwischen dem Tastenknopf (13) und der Basisplatte (12) angeordnet bzw. eingeschoben ist, **dadurch gekennzeichnet, dass** dieses weiterhin aufweist:
ein einstückiges U-förmiges großes Verbindungselement (15) mit einem Umfang, das zwischen der Basisplatte (12) und dem Tastenknopf (13) plaziert und drehbar um eine erste Achse ist,
ein einstückiges U-förmiges kleines Verbindungselement (14), das vollständig innerhalb des Umfangs des einstückigen U-förmigen großen Verbindungselements (15) plaziert und um eine zweite Achse drehbar ist, die eine einzelne bewegbare Ebene bildet, wobei die zweite Achse im rechten Winkel zu der ersten Achse ist,
wobei der Tastenknopf (13) vorzugsweise in einem horizontalen Zustand ohne Entwicklungsspiel gehalten ist.

2. Tastschaltgerät nach Anspruch 1, bei dem das elastische Element (16) eine Feder ist.

3. Tastschaltgerät nach Anspruch 2, bei dem die Feder eine Gummifeder bzw. ein Gummizug ist.

## Revendications

1. Dispositif (11) commutateur à touche, comprenant :
- une plaque (12) de base ;
- un sommet (13) de touche monté sur la plaque (12) de base ;
- un élément (16) élastique interposé entre le sommet (13) de touche et la plaque (12) de base, **caractérisé en ce qu'**il comprend en outre
- un grand élément (15) de liaison, d'une seule pièce, en forme de U, ayant un pourtour et placé entre la plaque (12) de base et le sommet (13) de touche, et pouvant tourner par rapport à un premier axe ;
et un petit élément (14) de liaison, d'une seule pièce, en forme de U, placé entièrement dans le pourtour du grand élément (15) de liaison d'une seule pièce, en forme de U, et pouvant tourner par rapport à un deuxième axe formant un plan mobile unique, le deuxième axe étant à angle droit avec le premier axe,
dans lequel le sommet (13) de touches est maintenu favorablement dans un état horizontal sans qu'il y ait du jeu.

2. Dispositif commutateur à touche suivant la revendication 1, dans lequel l'élément (16) élastique est un ressort.

3. Dispositif suivant la revendication 2, dans lequel le ressort est un ressort en caoutchouc.
